(19) Europäisches Patentamt
European Patent Office
Office européen des brevets

(11) **EP 4 372 867 A1**

(12) **EUROPEAN PATENT APPLICATION**
published in accordance with Art. 153(4) EPC

(43) Date of publication:
**22.05.2024 Bulletin 2024/21**

(21) Application number: **23784974.0**

(22) Date of filing: **04.04.2023**

(51) International Patent Classification (IPC):
$H01M\ 10/42$ (2006.01)       $H01M\ 50/586$ (2021.01)
$H01M\ 4/139$ (2010.01)       $H01M\ 10/052$ (2010.01)
$H01M\ 50/531$ (2021.01)       $H01M\ 4/02$ (2006.01)

(52) Cooperative Patent Classification (CPC):
H01M 4/02; H01M 4/139; H01M 10/052;
H01M 10/42; H01M 50/531; H01M 50/586;
Y02E 60/10

(86) International application number:
**PCT/KR2023/004544**

(87) International publication number:
**WO 2023/195750 (12.10.2023 Gazette 2023/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.04.2022 KR 20220041849**

(71) Applicant: **LG Chem, Ltd.**
**Yeongdeungpo-gu**
**Seoul 07336 (KR)**

(72) Inventors:
• **KANG, Min Ah**
**Daejeon 34122 (KR)**
• **KO, Chang Bum**
**Daejeon 34122 (KR)**
• **KIM, Ye Ji**
**Daejeon 34122 (KR)**
• **RYU, Dong Jo**
**Daejeon 34122 (KR)**
• **HAN, Seon Hee**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **INSULATING LAYER COMPOSITION FOR LITHIUM SECONDARY BATTERY AND LITHIUM SECONDARY BATTERY COMPRISING SAME**

(57) Disclosed is an insulation-layer forming composition for a lithium secondary battery, the composition not including carboxymethylcellulose, and comprising a conjugated diene copolymer as a binder polymer; a non-aqueous organic solvent; and an emulsifier, where a gel content is 70 percent by weight (wt%) or more with respect to a total weight of the conjugated diene copolymer, and a content of the emulsifier is 0.3 wt% or more with respect to the total weight of the conjugated diene copolymer.

Fig. 1

| | Example 2 | Example 6 | Example 7 | Example 8 |
|---|---|---|---|---|
| Initial | | | | |
| After 1 min | | | | |

EP 4 372 867 A1

**Description**

CROSS-REFERENCE TO RELATED APPLICATION(S)

This application is based on and claims priority under 35 U.S.C. 119 to Korean Patent Application No.10-2022-0041849, filed on April 4, 2022, in the Korean Intellectual Property Office, the disclosure of which is herein incorporated by reference in its entirety.

BACKGROUND OF THE DISCLOSURE

1. Field of the disclosure

The present disclosure relates to an insulation-layer forming composition for a lithium secondary battery and a lithium secondary battery including the same.

2. Description of the Prior Art

The technical advancement and increasing demands for mobile devices have led to rapidly increasing demands for secondary batteries for use as the energy source, and accordingly, numerous studies are under way about batteries that may meet a variety of demands.

One of the major research tasks on such secondary batteries is to improve safety. The main causes of battery safety-related accidents are the occurrence of an abnormal high temperature state due to a short circuit between a cathode and an anode. That is, under normal circumstances, a separator is disposed between the cathode and the anode to maintain electrical insulation, but under abnormal misuse or abuse circumstances, for example, the occurrence of overcharge or over-discharge of the battery, the occurrence of an internal short circuit due to dendritic growth of electrode materials or foreign matter, the permeation of sharp objects such as nails and screws into the battery, or the excessive deformation of the battery by external force, there may be limitations in using a typical separator alone.

In general, a microporous membrane formed of a polyolefin resin is mainly used as a separator, but the heat resistance thereof is not sufficient since the heat resistance temperature thereof is about 120°C to 160°C. Accordingly, the occurrence of an internal short circuit may a state of thermal runaway in which the separator shrinks due to the short circuit reaction heat to result in an enlargement in a short-circuit part and the generation of much more reaction heat. Thus, various methods for reducing the possibility of cell deformation, external impact, or a physical short circuit between the cathode and the anode have been studied.

For example, in order to prevent the occurrence of a short circuit caused by the contact of an electrode tap with an upper end of an electrode assembly, resulting from the movement of the electrode assembly in a state in which a battery is completed, there is a method of attaching a predetermined sized insulation tape on the electrode tab near the upper end of a current collector. However, the winding of such an insulation tape is very complicated, and when the insulation tape is wound from the upper end of the current collector to a length slightly extending downward, such a portion may cause an increase in the thickness of the electrode assembly. Moreover, the tape tends to be unwound when the electrode tab is bent.

In addition, there is a method in which an insulation layer is formed of a non-aqueous binder (PVDF, etc.) or an aqueous styrene-butadiene copolymer (SBL) on the tab portion of the cathode. However, the non-aqueous binder (PVDF, etc.) has a lowered wet adhesion and thus fails to prevent the migration of lithium ions in an overlay region of the electrode, resulting in the exhibition of capacity. In particular, lithium ions may be precipitated when capacity is exhibited in the overlay region of the electrode, and this may cause a decrease in stability of the battery cell. In addition, when an aqueous styrene-butadiene copolymer (SBL) binder is used, this may cause the gelation of PVDF, an organic binder used as a cathode binder during simultaneous coating with a slurry for a cathode mixture layer, the permeation of the cathode slurry into the boundary of an insulating liquid, and the reduction in battery performance caused by side reactions due to moisture, and accordingly, there is a problem with the process in that simultaneous coating of the slurry for a cathode mixture layer and the slurry for an insulating coating layer are impossible. In addition, the non-aqueous binder (PVDF and the like) or the aqueous styrene-butadiene copolymer (SBL) insulation layer has a problem of poor storage stability due to phase separation during storage.

Furthermore, carboxymethylcellulose is widely used as a thickener in the insulation-layer forming composition for a lithium secondary battery. However, since such carboxymethylcellulose has brittleness, there is a problem in that the processability may be lowered in a winding process or cutting process.

Thus, there is a high need for the development of an insulating solution that not only has excellent insulating properties, but also enables simultaneous coating of the slurry for a cathode mixture layer and the slurry for an insulating coating layer, has excellent processability due to no brittleness, and has good storage stability.

Prior Art Document

Patent Document
KR 10-1586530 B1

SUMMARY OF THE DISCLOSURE

The present disclosure has been made in order to solve the above-mentioned problems in the prior art, and an aspect of the present disclosure is to provide an insulation-layer forming composition for a lithium secondary battery, having excellent storage stability as well as excellent insulating properties and processability.

Another aspect of the present disclosure is to provide a method for manufacturing a cathode for a lithium secondary battery using the insulation-layer forming composition for a lithium secondary battery.

Still another aspect of the present disclosure is to provide a cathode for a lithium secondary battery formed of the insulation-layer forming composition for a lithium secondary battery.

Still another aspect of the present disclosure is to provide a lithium secondary battery including the cathode for a lithium secondary battery.

However, aspects of the present disclosure are not limited to the aspects described above, and other aspects not described herein may be clearly understandable by those who have ordinary knowledge in the technical field to which the present disclosure belongs (referred to as "those skilled in the art") based on the description of the claims.

In order to achieve the above aspects, according to one embodiment of the present invention, there is provided an insulation-layer forming composition for a lithium secondary battery, the insulation-layer forming composition including: a conjugated diene copolymer as a binder polymer; a non-aqueous organic solvent; and an emulsifier, wherein a gel content is 70 percent by weight (wt%) or more with respect to a total weight of the conjugated diene copolymer, and a content of the emulsifier is 0.3 wt% or more with respect to the total weight of the conjugated diene copolymer.

In some embodiments, the insulation-layer forming composition for a lithium secondary battery may not contain carboxymethylcellulose.

In some embodiments, the conjugated diene copolymer may include a polymerized product of one or more monomers selected from the group consisting of: (a) a conjugated diene-based monomer or a conjugated diene-based polymer; (b) one or more monomers selected from the group consisting of acrylate-based monomers, vinyl-based monomers, and nitrile-based monomers; and (c) unsaturated carboxylic acid-based monomers and hydroxy group-containing monomers.

In some embodiments, the conjugated diene-based monomer may be one monomer selected from the group consisting of 1,3-butadiene, isoprene, chloroprene, and piperylene, and the conjugated diene-based polymer may be a polymer of two or more monomers selected from the group consisting of 1,3-butadiene, isoprene, chloroprene, and piperylene, a styrene-butadiene copolymer, an acrylonitrile-butadiene copolymer, a styrene-isoprene copolymer, an acrylate-butadiene rubber, an acrylonitrile-butadiene-styrene rubber, an ethylene-propylene-diene based polymer, or a partially epoxidized or brominated polymer of the forgoing polymers, or mixtures thereof.

In some embodiments, the acrylate-based monomer may be at least one monomer selected from the group consisting of methylethacrylate, methacryloxy ethylethyleneurea, β-carboxy ethylacrylate, aliphatic monoacrylate, dipropylene diacrylate, ditrimethylolpropane tetraacrylate, dipentaerythriol hexaacrylate, pentaerythriol triacrylate, pentaerythriol tetraacrylate, and glycidyl methacrylate.

In some embodiments, the vinyl-based monomer may be at least one monomer selected from the group consisting of styrene, α-methylstyrene, β-methylstyrene, p-t-butylstyrene, and divinyl benzene.

In some embodiments, the nitrile-based monomer may be at least one monomer selected from the group consisting of acrylonitrile, methacrylonitrile, and allyl cyanide.

In some embodiments, the unsaturated carboxylic acid-based monomer may be at least one monomer selected from the group consisting of maleic acid, fumaric acid, methacrylic acid, acrylic acid, glutaric acid, itaconic acid, tetrahydrophthalic acid, corotonic acid, isocrotonic acid, and nadic acid.

In some embodiments, the hydroxy group-containing monomer may be at least one monomer selected from the group consisting of hydroxy acrylate, hydroxyethyl acrylate, hydroxybutyl acrylate, hydroxypropyl acrylate, hydroxyethyl methacrylate, hydroxypropyl methacrylate, and hydroxybutyl methacrylate.

In some embodiments, the conjugated diene copolymer may contain a polymerized product of, with respect to the total weight thereof, 25 to 45 wt% of the conjugated diene-based monomer or conjugated diene-based polymer (a), 50 to 70 wt% of the one or more monomers selected from the group consisting of acrylate-based monomers, vinyl-based monomers, and nitrile-based monomers (b), and 1 to 20 wt% of the one or more monomers selected from the group consisting of unsaturated carboxylic acid-based monomers and hydroxy group-containing monomers (c).

In some embodiments, the non-aqueous organic solvent may be at least one selected from the group consisting of N-methyl-pyrrolidone (NMP), dimethylformamide (DMF), dimethylacetamide (DMAc), dimethyl sulfoxide (DMSO), ethylene carbonate (EC), diethyl carbonate (DEC), ethyl methyl carbonate (EMC), dimethyl carbonate (DMC), propylene carbonate (PC), dipropyl carbonate (DPC), butylene carbonate (BC), methylpropyl carbonate (MPC), ethylpropyl carbonate (EPC), acetonitrile, dimethoxyethane, tetrahydrofuran (THF), $\gamma$-butyrolactone, methyl alcohol, ethyl alcohol, and isopropyl alcohol.

In some embodiments, the copolymer is a styrene-butadiene copolymer, and the non-aqueous organic solvent is N-methyl-pyrrolidone (NMP).

In some embodiments, the insulation-layer forming composition may have a moisture content of 10,000 ppm or less.

According to another embodiment of the present invention, there is provided a method for manufacturing a cathode for a lithium secondary battery, the method including: preparing a water-dispersed conjugated diene copolymer; adding a non-aqueous organic solvent to the water-dispersed conjugated diene copolymer, followed by warming and decompression, to prepare a slurry for an insulating coating layer; applying a slurry for a cathode mixture layer on one or both surfaces of a cathode current collector, the slurry for a cathode mixture layer containing a cathode active material, a non-aqueous binder, a conductor, and a non-aqueous organic solvent; applying the slurry for an insulating coating layer to cover a partial region of the slurry for a cathode mixture layer applied to the cathode current collector, from a partial region of a non-coated part of the cathode current collector; and drying the slurry for a cathode mixture layer and the slurry for an insulating coating layer applied to the cathode current collector, wherein the slurry for an insulating coating layer comprises an emulsifier.

In some embodiments, the conjugated diene copolymer may be a conjugated diene latex.

In some embodiments, the conjugated diene copolymer may be a styrene-butadiene latex, and the non-aqueous organic solvent is N-methyl-pyrrolidone (NMP).

According to still another embodiment of the present invention, there is provided a cathode for a lithium secondary battery, the cathode including: a cathode current collector; a cathode tap protruding from the cathode current collector; and an insulation layer coated on the cathode tap and formed of an insulating material, wherein the insulating material contains the insulation-layer forming composition for a lithium secondary battery.

According to still another embodiment of the present invention, there is provided a lithium secondary battery including the cathode for a lithium secondary battery.

According to one embodiment of the present disclosure, the insulation-layer forming composition for a lithium secondary battery does not contain carboxymethylcellulose and thus has no brittleness, thereby having excellent processability during a winding process or a cutting process.

According to one embodiment of the present disclosure, the insulation-layer forming composition for a lithium secondary battery according to one embodiment of the present disclosure is capable of simultaneously performing cathode coating and insulating solution coating, thereby having excellent processability in manufacturing of a cathode for a lithium secondary battery, by replacing water, which is a dispersion solvent of an aqueous conjugated diene copolymer, with a non-aqueous organic solvent (e.g., N-methyl-pyrrolidone).

According to one embodiment of the present disclosure, the insulation-layer forming composition for a lithium secondary battery has a high gel content and contains an emulsifier, thereby providing excellent storage stability.

However, the effects of the present disclosure are not limited to the effects described above, and other effects not described herein may be clearly understandable by those who have ordinary knowledge in the technical field to which the present disclosure belongs (referred to as "those skilled in the art") based on the description of the claims.

BRIEF DESCRIPTION OF THE DRAWINGS

The above and other aspects, features and advantages of the present disclosure will be more apparent from the following detailed description taken in conjunction with the accompanying drawings.

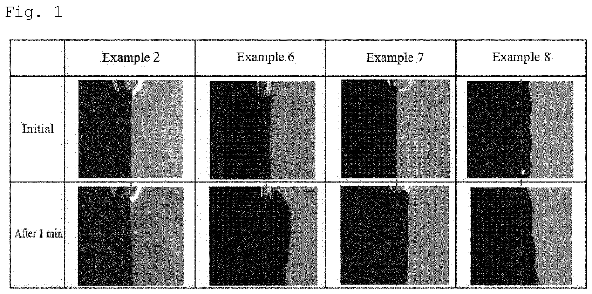

FIG. 1 shows moisture influence evaluation results according to Experimental Example 3.

DETAILED DESCRIPTION OF THE EXEMPLARY EMBODIMENTS

Hereinafter, embodiments of the present disclosure will be described clearly and in detail so that those skilled in the art may easily practice the embodiments of the present disclosure with reference to the accompanying drawings. However, this is merely presented as an example, and the present disclosure is not limited thereby, and the present disclosure is only defined by the scope of the claims to be described below.

The terms or words used in this specification and claims should not be construed as being limited to ordinary or dictionary meanings, and it should be interpreted as a meaning and concept consistent with the technical idea of the present disclosure based on the principle that the inventors may appropriately define the concept of terms in order to explain their disclosure in the best way.

As used herein, expressions such as "comprising," "containing," and "including" should be understood as openended terms that connote the possibility of including other embodiments.

As used herein, "preferred" and "preferably" refer to embodiments of the present disclosure that may provide certain advantages under certain circumstances. However, other embodiments may also be preferred under the same or other circumstances. Additionally, the recitation of one or more preferred embodiments does not imply that other embodiments are not useful, nor is it intended to exclude other embodiments from the scope of the present disclosure.

As used herein, "insulation coating layer" means an insulating member formed by applying and drying from at least a portion of a non-coated part of a current collector to at least a portion of an electrode mixture layer.

As used herein, "metal specimen" refers to a space where an insulating coating layer is formed, and means a metal current collector that is used in the manufacturing of an electrode, and may be a metal current collector that is punched to have a predetermined width and a predetermined length. For example, the metal specimen may be aluminum, copper, or an aluminum alloy.


1. Insulation-layer forming composition for lithium secondary battery


According to one embodiment of the present disclosure, there is provided an insulation-layer forming composition for a lithium secondary battery, the insulation-layer forming composition including: a conjugated diene copolymer as a binder polymer; a non-aqueous organic solvent; and an emulsifier, where a gel content is 70 percent by weight (wt%) or more with respect to the total weight of the conjugated diene copolymer, and a content of the emulsifier is 0.3 wt% or more with respect to the total weight of the conjugated diene copolymer.

Hereinafter, each configuration of the insulation-layer forming composition for a lithium secondary battery will be described in detail.

The insulation-layer forming composition for a lithium secondary battery according to one embodiment of the present disclosure includes a conjugated diene copolymer as a binder polymer.

The conjugated diene copolymer may include a polymerized product of one or more monomers selected from the group consisting of: (a) a conjugated diene-based monomer or a conjugated diene-based polymer; (b) one or more monomers selected from the group consisting of acrylate-based monomers, vinyl-based monomers, and nitrile-based monomers; and (c) unsaturated carboxylic acid-based monomers and hydroxy group-containing monomers.

The conjugated diene-based monomer may be one monomer selected from the group consisting of 1,3-butadiene, isoprene, chloroprene, and piperylene.

The conjugated diene-based polymer may be, for example, a polymer of two or more monomers selected from the group consisting of 1,3-butadiene, isoprene, chloroprene, and piperylene, a styrene-butadiene copolymer, an acrylonitrile-butadiene copolymer, a styrene-isoprene copolymer, an acrylate-butadiene rubber, an acrylonitrile-butadiene-styrene rubber, an ethylene-propylene-diene based polymer, or a partially epoxidized or brominated polymer of the foregoing polymers, or mixtures thereof.

The acrylate-based monomer may be at least one monomer selected from the group consisting of methylethacrylate, methacryloxy ethylethyleneurea, β-carboxy ethyl acrylate, aliphatic monoacrylate, dipropylene diacrylate, ditrimethylolpropane tetraacrylate, dipentaerythriol hexaacrylate, pentaerythriol triacrylate, pentaerythriol tetraacrylate, and glycidyl methacrylate.

The vinyl-based monomer may be at least one monomer selected from the group consisting of styrene, α-methylstyrene, β-methylstyrene, p-t-butylstyrene, and divinyl benzene.

The nitrile-based monomer may be at least one monomer selected from the group consisting of acrylonitrile, methacrylonitrile, and allyl cyanide.

The unsaturated carboxylic acid-based monomer may be at least one monomer selected from the group consisting of maleic acid, fumaric acid, methacrylic acid, acrylic acid, glutaric acid, itaconic acid, tetrahydrophthalic acid, corotonic acid, isocrotonic acid, and nadic acid.

The hydroxy group-containing monomer may be at least one monomer selected from the group consisting of hydroxy acrylate, hydroxyethyl acrylate, hydroxybutyl acrylate, hydroxypropyl acrylate, hydroxyethyl methacrylate, hydroxypropyl methacrylate, and hydroxybutyl methacrylate.

In the insulation-layer forming composition for a lithium secondary battery according to the present disclosure, conjugated diene copolymer particles having an average particle diameter of 50 nm or more to 500 nm or less are present in an independent phase.

Preferably, the conjugated diene copolymer may be a styrene-butadiene copolymer, and more preferably, may be a styrene-butadiene latex, but is not limited thereto.

A method for manufacturing conjugated diene copolymer particles is not particularly limited, and the conjugated diene copolymer particles may be manufactured by a known suspension polymerization method, emulsion polymerization method, seed polymerization method, or the like.

A monomer mixture for manufacturing the copolymer particles may contain one or more of other ingredients, such as a polymerization initiator, a crosslinking agent, a coupling agent, a buffer, a molecular weight modifier, and an emulsifier.

Specifically, the copolymer particles may be manufactured by an emulsion polymerization method, and in such a case, the average particle diameter of the copolymer particles may be adjusted by the amount of the emulsifier, and in general, as the amount of the emulsifier increases, the particle size tends to decrease, and as the amount of the emulsifier decreases, the particle size tends to increase. A desired average particle diameter can be realized by adjusting the amount of the emulsifier considering the desired particle size, reaction time, reaction stability, and the like. The polymerization temperature and polymerization time may be appropriately determined depending on the polymerization method, the type of polymerization initiator, or the like, and for example, the polymerization temperature may be 10°C to 150°C and the polymerization time may be 1 to 20 hours.

The polymerization initiator may be an inorganic or organic peroxide, and for example, water-soluble initiators including potassium persulfate, sodium persulfate, and ammonium persulfate and oil-soluble initiators including cumene hydroperoxide and benzoyl peroxide may be used. In addition, the monomer mixture may further contain an activator to promote the initiation reaction of a peroxide together with the polymerization initiator, and the activator may be at least one selected from the group consisting of sodium formaldehyde sulfoxylate, sodium ethylenediamine tetraacetate, ferrous sulfate, and dextrose.

The crosslinking agent is a material that promotes crosslinking of the binder, and examples thereof may include: amines, such as diethylene triamine, triethylene tetramine, diethylamino propylamine, xylene diamine, and isophorone diamine; acid anhydrides, such as dodecyl succinic anhydride and phthalic anhydride; polyamide resins, polysulfide resins, phenolic resins, ethylene glycol dimethacrylate, diethylene glycol dimethacrylate, triethylene glycol dimethacrylate, 1,3-butanediol dimethacrylate, 1,6-hexanediol dimethacrylate, neopentyl glycol dimethacrylate, trimethylol propane trimethacrylate, trimethylol methane triacrylate, glycidyl methacrylate, and the like, and examples of the grafting agent may include aryl methacrylate (AMA), triaryl isocyanurate (TAIC), triaryl amine (TAA), diaryl amine (DAA), and the like.

The coupling agent is a material for increasing the adhesion between the active material and the binder and is characterized by having two or more functional groups, and any material that has one functional group reacting with a hydroxyl group or carboxy group on the surface of a silicon, tin, or graphite active material to form a chemical bond and the other functional group reacting with a nanocomposite according to the present disclosure to form a compound bond is not particularly limited. Examples of the coupling agent may include triethoxysilylpropyl tetrasulfide, mercaptopropyl triethoxysilane, aminopropyl triethoxysilane, chloropropyl triethoxysilane, vinyltriethoxysilane, methacryloxytpropyl triethoxysilane, methacryloxypropyl triethoxysilane, glycidoxypropyl triethoxysilane, isocyanatopropyl triethoxysilane, cyanatopropyl triethoxysilane, and the like.

The buffer may be, for example, one selected from the group consisting of $NaHCO_3$, $Na_2CO_3$, $K_2HPO_4$, $KH_2PO_4$, $Na_2HPO_4$, NaOH, and $NH_4OH$.

Examples of the molecular weight modifier may include mercaptans, terpenes such as terbinolene, dipentene, and t-terpene, halogenated hydrocarbons such as chloroform and carbon tetrachloride, and the like.

The conjugated diene copolymer may contain a polymerized product of, with respect to the total weight thereof, 25 to 45 wt% of the conjugated diene-based monomer or conjugated diene-based polymer (a), 50 to 70 wt% of the one or more monomers selected from the group consisting of acrylate-based monomers, vinyl-based monomers, and nitrile-based monomers (b), and 1 to 20 wt% of the one or more monomers selected from the group consisting of unsaturated monocarboxylic acid-based monomers and hydroxy group-containing monomers (c). Other ingredients, such as the emulsifier, the buffer, and the crosslinking agent, may be optionally contained within a range of 0.1 to 10 wt%.

When the content ratio among the respective monomers constituting the conjugated diene copolymer falls within the above range, the Tg may be -10°C or more and 40°C or less.

When the content ratio among the respective monomers constituting the conjugated diene copolymer falls within the above range, the flexibility, insulating characteristics, electrolyte resistance characteristics of the insulating layer may be significantly improved.

In the experimental example of the present disclosure, when the content ratio among the respective monomers constituting the conjugated diene copolymer falls within the above range, it was confirmed that all the initial tackiness, brittleness, and insulating characteristics were excellent.

Meanwhile, an average particle diameter of the copolymer may be 50 nm to 500 nm. An average particle diameter of less than 50 nm to 500 nm or more may result in a deterioration in dispersion stability, and thus such an average particle diameter is not preferable.

The insulation-layer forming composition for a lithium secondary battery according to one embodiment of the present invention includes a non-aqueous organic solvent.

In the composition according to the present invention, the copolymer particles show an effect of enhancing adhesion when the copolymer particles are present in independent phase, and thus, it is very important to prevent the agglomeration between particles. Accordingly, the composition of the present disclosure contains a dispersion solvent for dispersing the copolymer particles. In the present disclosure, a non-aqueous organic solvent is used as a dispersion solvent.

The non-aqueous organic solvent may be at least one selected from the group consisting of N-methyl-pyrrolidone (NMP), dimethylformamide (DMF), dimethylacetamide (DMAc), dimethyl sulfoxide (DMSO), ethylene carbonate (EC), diethyl carbonate (DEC), ethyl methyl carbonate (EMC ), dimethyl carbonate (DMC), propylene carbonate (PC), dipropyl carbonate (DPC), butylene carbonate (BC), methylpropyl carbonate (MPC), ethylpropyl carbonate (EPC), acetonitrile, dimethoxyethane, tetrahydrofuran (THF), γ-butyrolactone, methyl alcohol, ethyl alcohol, and isopropyl alcohol.

Preferably, the non-aqueous organic solvent may be N-methyl-pyrrolidone (NMP), but is not limited thereto.

The insulation-layer forming composition for a lithium secondary battery according to one embodiment of the present disclosure may include an emulsifier. By including the emulsifier, storage stability of the insulation-layer forming composition for a lithium secondary battery may be improved.

The emulsifier is a material having both a hydrophilic group and a hydrophobic group. In one specific embodiment, the emulsifier may be at least one selected from the group consisting of anionic emulsifiers and nonionic emulsifiers.

The use of a nonionic emulsifier together with an anionic emulsifier helps control the particle size and distribution and contributes to the electrostatic stabilization of the ionic emulsifier, thereby providing additional stabilization of a colloidal form through van der Waals forces of polymer particles. The nonionic emulsifier is rarely used alone since the nonionic emulsifier produces less stable particles than the anionic emulsifier.

The anionic emulsifier may be selected from the group consisting of phosphates, carboxylates, sulfates, succinates, sulfosuccinate-based, sulfonates, and disulfonates. For example, the anionic emulsifier may be selected from the group consisting of sodium alkyl sulfate, sodium polyoxyethylene sulfate, sodium lauryl ether sulfate, sodium polyoxyethylene lauryl ether sulfate, sodium lauryl sulfate, sodium alkyl sulfonate , sodium alkyl ether sulfonate, sodium alkylbenzene sulfonate, sodium linear alkylbenzene sulfonate, sodium alpha-olefin sulfonate, sodium alcohol polyoxyethylene ether sulfonate, sodium dioctyl sulfosuccinate, sodium perfluorooctanesulfonate, sodium perfluorobutanesulfonate, alkyl diphenyloxide disulfonates, sodium dioctyl sulfosuccinate (DOSS), sodium alkyl-aryl phosphate, sodium alkyl ether phosphate, and sodium lauroyl sarcosinate. However, the anionic emulsifier is not limited thereto, and known anionic emulsifiers may be included in the contents of the present disclosure.

The nonionic emulsifier may be an ester type, an ether type, or an ester ether type. Examples of the nonionic emulsifier may include polyoxyethylene glycol, polyoxyethylene glycol methyl ether, polyoxyethylene monoallyl ether, polyoxyethylene bisphenol-A ether, polypropylene glycol, polyoxyethylene alkenyl ether, and the like. However, the nonionic emulsifier is not limited thereto, and all known nonionic emulsifiers may be included in the contents of the present disclosure.

In an embodiment, a content of the emulsifier may be 0.3 percent by weight (wt%) or more with respect to the total weight of the conjugated diene copolymer. Preferably, the emulsifier may be 0.3 wt% or more and 5 wt% or less with respect to the total weight of the conjugated diene copolymer. When the content of the emulsifier is less than 0.3 wt%, the storage stability of the insulation-layer forming composition for a lithium secondary battery may be reduced, and when the content of the emulsifier is greater than 5 wt%, the insulating properties of the insulation-layer forming composition for a lithium secondary battery may be degraded.

The composition for a lithium secondary battery according to one embodiment of the present disclosure has a gel content of 70 wt% or more with respect to the total weight of the conjugated diene copolymer.

As it contains a high gel content of 70 wt% or more, the storage stability of the insulation-layer forming composition for lithium secondary batteries may be improved, and the initial tackiness may be appropriately adjusted so as not to be too high, thereby preventing the electrodes from sticking to each other in a winding and slitting process to degrade processability.

In an embodiment, a moisture content of the insulation-layer forming composition for a lithium secondary battery may be 10,000 ppm or less, preferably 5,000 ppm or less, and more preferably 3,000 ppm or less. When the moisture content of the insulation-layer forming composition for a lithium secondary battery is in the above range, it may be coated separately from the electrode (cathode) mixture layer, and prevents the slurry for an electrode (cathode) mixture layer from permeating (e.g., penetrating) into the slurry for an insulating coating layer, thereby preventing degradation of the physical properties of the electrode such as no realization of the insulating effect.

In an embodiment, the insulation-layer forming composition for a lithium secondary battery according to one embodiment of the present disclosure may not contain carboxymethylcellulose.

Carboxymethyl cellulose is used as a thickening agent in insulation-layer forming compositions, but it has brittleness and thus has a problem of lowering processability in the winding process or the cutting process. Accordingly, since the insulation-layer forming composition for a lithium secondary battery according to the present disclosure does not contain carboxymethylcellulose, it is not brittle, and it is possible to improve processability in the winding process or the cutting process.

## 2. Method of manufacturing cathode for lithium secondary battery

According to another embodiment of the present disclosure, there is provided a method for manufacturing a cathode for a lithium secondary battery, the method including: preparing a water-dispersed (e.g., water-dispersible) conjugated diene copolymer; adding a non-aqueous organic solvent to the water-dispersed conjugated diene copolymer, followed by warming and decompression, to prepare a slurry for an insulating coating layer; applying a slurry for a cathode mixture layer on one or both surfaces of a cathode current collector, the slurry for a cathode mixture layer containing a cathode active material, a non-aqueous binder, a conductor (e.g., a conductive material), and a non-aqueous organic solvent; applying the slurry for an insulating coating layer to cover a partial region of the slurry for a cathode mixture layer applied to the cathode current collector, from a partial region of a non-coated part of the cathode current collector; and drying the slurry for a cathode mixture layer and the slurry for an insulating coating layer applied to the cathode current collector, where the slurry for an insulating coating layer includes an emulsifier.

First, the water-dispersed conjugated diene copolymer is prepared. Since the manufacturing method thereof is the same as disclosed in 1. Insulation-layer forming composition for lithium secondary battery, specific details thereof will be omitted.

Next, the non-aqueous organic solvent is mixed with the water-dispersed conjugated diene copolymer, and the mixture is heated and reduced in terms of pressure.

In such a case, water which is a dispersion solvent of the conjugated diene copolymer particles is replaced with a non-aqueous organic solvent.

In the method of manufacturing a cathode for a lithium secondary battery of the present disclosure, the slurry for a cathode mixture layer and the slurry for an insulating coating layer are each applied to a current collector, and then dried at once to manufacture a cathode, so the manufacturing process efficiency is significantly excellent.

Preferably, the conjugated diene copolymer may be a conjugated diene latex, but is not limited thereto.

Preferably, the conjugated diene latex may be a styrene-butadiene latex, but is not limited thereto.

Preferably, the non-aqueous organic solvent may be N-methyl-pyrrolidone (NMP), but is not limited thereto.

Preferably, a temperature may be raised to a setting temperature of 40°C or more and 100°C or less during the heating, and then a pressure may be reduced to less than 200 torr. Accordingly, water, which is a solvent of the water-dispersed conjugated diene latex, may be efficiently replaced with a non-aqueous organic solvent.

The conjugated diene latex particles maintain their particle shape even after replacing water, which is a dispersion solvent of the conjugated diene latex particles, with a non-aqueous organic solvent. Whether or not the particle shape is maintained may be confirmed by measuring a particle size. A size of the particles may be measured by a DLS particle size analyzer, a laser diffraction particle size analyzer, or a transmission electron microscope (TEM), but is not limited thereto.

In addition, the slurry for an insulating coating layer may include an emulsifier. When the slurry for an insulating coating layer includes an emulsifier, storage stability of the insulation-layer forming composition for a lithium secondary battery prepared using the slurry may be improved.

Next, the slurry for a cathode mixture layer containing a cathode active material, a non-aqueous binder, a conductor, and a non-aqueous organic solvent is applied to one or both surfaces of the cathode current collector.

In the cathode for a lithium secondary battery according to the present disclosure, the cathode current collector may be one that has high conductivity without causing chemical changes in the battery. For example, stainless steel, aluminum, nickel, titanium, calcined carbon, or the like may be used, and aluminum or stainless steel surface-treated with carbon, nickel, titanium, silver, or the like may be used. For example, the current collector may be aluminum.

In addition, any cathode active material that is commonly used in a cathode may be used as the cathode active material, and examples thereof may include lithium manganese oxide, lithium cobalt oxide, lithium nickel oxide, lithium iron oxide, or lithium composite oxides resulting from combinations thereof, but are not limited thereto.

The non-aqueous binder may include at least one resin selected from the group consisting of polyvinylidene fluoride-hexafluoropropylene copolymer (PVDF-co-HFP), polyvinylidene fluoride, polyacrylonitrile, polymethyl methacrylate, and copolymers thereof. As one example, the binder may include polyvinylidene fluoride.

The conductive material may be used to improve performance, such as electrical conductivity, of the cathode, and at least one selected from the group consisting of natural graphite, artificial graphite, carbon black, acetylene black, Ketjen black, and carbon fibers may be used. For example, the conductive material may include acetylene black.

The non-aqueous organic solvent may be at least one selected from the group consisting of N-methyl-pyrrolidone (NMP), dimethylformamide (DMF), dimethylacetamide (DMAc), dimethyl sulfoxide (DMSO), ethylene carbonate (EC), diethyl carbonate (DEC), ethyl methyl carbonate (EMC ), dimethyl carbonate (DMC), propylene carbonate (PC), dipropyl carbonate (DPC), butylene carbonate (BC), methylpropyl carbonate (MPC), ethylpropyl carbonate (EPC), acetonitrile, dimethoxyethane, tetrahydrofuran (THF), $\gamma$-butyrolactone, methyl alcohol, ethyl alcohol, and isopropyl alcohol, and for example, the solvent may be N-methyl-2-pyrrolidone (NMP).

Simultaneously with or after applying the slurry for a cathode mixture layer, the slurry for an insulating coating layer is applied to cover a partial region of the slurry for a cathode mixture layer applied to the current collector, from a partial region of a non-coated part of the cathode current collector.

Specifically, in the applying of the slurry for an insulating coating layer to the current collector, the slurry for an insulating coating layer may be applied while the slurry for a cathode mixture layer is in a non-dried state, or the slurry for a cathode mixture layer and the slurry for an insulating layer may be applied simultaneously.

Next, the slurry for a cathode mixture layer and the slurry for an insulating coating layer applied to the cathode current collector are dried.

In the drying of the slurry for a cathode mixture layer and the slurry for an insulating coating layer, the solvent may be removed by completely drying the slurry for a cathode mixture layer and the slurry for an insulating coating layer by a drying method that is commonly known in the art.

In a specific example, drying may be applied by modifying a hot air method, a direct heating method, an induction heating method, or the like, at a temperature at which all solvents volatilize, but is not limited thereto. For example, the drying of the insulating coating liquid may be performed in a hot air method.

In such a case, the drying temperature may be in the temperature range of 50°C to 300°C, preferably 60 to 200°C, and more preferably 70 to 150°C. When the drying temperature of the insulating coating liquid is lower than 50°C, the insulating coating liquid is difficult to completely dry due to a too low temperature, and when the drying temperature is higher than 300°C, the deformation of an electrode may occur due to a too high drying temperature.

Accordingly, a cathode mixture layer and an insulating coating layer are formed on the current collector, and the current collector is rolled, thereby manufacturing a cathode for a lithium secondary battery.

3. Cathode for lithium secondary battery

According to still another embodiment of the present disclosure, there is provided a cathode for a lithium secondary battery including: a cathode current collector; a cathode tap protruding from the cathode current collector; and an insulating layer coated on the cathode tap and formed of an insulating material, where the insulating material contains the insulation-layer forming composition for a lithium secondary battery.

Since the cathode for a lithium secondary battery according to still another embodiment of the present disclosure includes an insulation layer containing the insulation-layer forming composition for a lithium secondary battery on the cathode tab, the cathode may be manufactured by simultaneously applying the slurry for a cathode mixture layer and the slurry for an insulating coating layer. Accordingly, the manufacturing process of the battery may be greatly shortened, ultimately reducing the manufacturing cost of the battery, and forming an insulating area more widely to make the safety of the battery can be further improved. Furthermore, the problem that may occur in the using of a conventional insulating film or tape, that is, the possibility of release is very low when the cathode tab for attachment to a corresponding region is bent, and an increase in the thickness of the electrode assembly is not caused.

**4. Lithium secondary battery**

According to still another embodiment of the present disclosure, there is provided a lithium secondary battery including the cathode for the lithium secondary battery.

More specifically, the lithium secondary battery according to still another embodiment of the present disclosure may include a cathode for a lithium secondary battery; an anode; and a separator and an electrolyte.

In addition, the lithium secondary battery may optionally further include a battery container accommodating an electrode assembly of the cathode, the anode, and the separator, and a sealing member sealing the battery container.

The anode may include an anode current collector and an anode active material layer on the anode current collector.

The anode current collector is not particularly limited as long as it has high conductivity without causing chemical changes in the battery. For example, copper, stainless steel, aluminum, nickel, titanium, calcined carbon, copper or stainless steel surface-treated with carbon, nickel, titanium, silver, and the like, aluminum-cadmium alloys and the like may be used. The anode current collector may have a thickness typically in a range from 3 um to 500 $\mu$m, and, similar to the cathode current collector, fine irregularities may be formed on the surface of the current collector to enhance bonding strength of the anode active material. For example, it may be used in various forms such as films, sheets, foils, nets, porous materials, foams, and non-woven fabrics.

The anode active material layer may optionally include a binder and a conductive material together with the anode active material.

A compound capable of reversible intercalation and deintercalation of lithium may be used as the anode active material. Specific examples may include carbonaceous materials such as artificial graphite, natural graphite, graphitized carbon fiber, and amorphous carbon; metallic compounds capable of being alloyed with lithium, such as Si, Al, Sn, Pb, Zn, Bi, In, Mg, Ga, Cd, Si alloys, Sn alloys, or Al alloys; metal oxides capable of doping and undoping lithium, such as $SiO_\beta$ (0<$\beta$<2), $SnO_2$, vanadium oxide, and lithium vanadium oxide; or a composite including the metallic compound and the carbonaceous material, such as a Si-C composite or a Sn-C composite, and any one or a mixture of two or more of these may be used. Furthermore, a metal lithium thin film may be used as the anode active material. As the carbon material, both low crystalline carbon and high crystalline carbon may be used. Soft carbon and hard carbon are typical examples of the low crystalline carbon. Typical examples of the high crystalline carbon may include high-temperature calcined carbon such as amorphous, platy, scale, spherical or fibrous natural graphite or artificial graphite, kish graphite, pyrolytic carbon, mesophase pitch based carbon fiber, meso-carbon microbeads, mesophase pitches and petroleum or coal tar pitch derived cokes and the like.

The anode active material may be included in an amount of 80 parts by weight to 99 parts by weight with respect to the total weight of the anode active material layer.

The binder is a component that assists in bonding between the conductive material, the active material, and the current collector, and is typically added in an amount of 0.1 parts by weight to 10 parts by weight with respect to the total weight of the anode active material layer. Examples of such binders may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene based polymer (EPDM), sulfonated-EPDM, styrene-butadiene rubber, nitrile-butadiene rubber, fluororubber, various copolymers thereof, and the like.

The conductive material is a component for further improving the conductivity of the anode active material, and may be added in an amount of 10 parts by weight or less, preferably 5 parts by weight or less, with respect to the total weight of the anode active material layer. The conductive material is not particularly limited as long as it has conductivity without causing chemical changes in the battery, and examples thereof may include graphite such as natural graphite or artificial graphite; carbon black such as acetylene black, ketjen black, channel black, furnace black, lamp black, and thermal black; conductive fibers such as carbon fibers and metal fibers; metal powders such as carbon fluoride, aluminum, and nickel powder; conductive whiskeys such as zinc oxide and potassium titanate; conductive metal oxides such as titanium oxide; and conductive materials such as polyphenylene derivatives.

The anode active material layer may be formed by applying, on an anode current collector, a composition for forming an anode active material layer, prepared by dissolving or dispersing a cathode active material and optionally a binder and a conductive material in a solvent and then drying the composition, or by casting the composition for forming the cathode active material layer on a separate support and then laminating a film obtained by peeling from the support on an anode current collector.

The separator separates the anode from the cathode and provides a passage for lithium ion migration, and any separator may be used without particular limitation as long as it is commonly used as a separator in a lithium secondary battery. In particular, it is preferable to use a separator having low resistance to migration of ions of an electrolyte and being excellent in moisturization of the electrolyte. Specifically, a porous polymer film, for example, a porous polymer film made of polyolefin-based polymers such as ethylene homopolymer, propylene homopolymer, ethylene/butene copolymer, ethylene/hexene copolymer, and ethylene/methacrylate copolymer, or a laminated structure of two or more layers of these may be used. In addition, conventional porous non-woven fabrics, for example, non-woven fabrics made of high-melting glass fibers, polyethylene terephthalate fibers, and the like may be used. In addition, a coated separator containing a ceramic component or a polymer material may be used to secure heat resistance or mechanical strength, and may be selectively used in a single-layer or multi-layer structure.

Examples of the electrolyte may include organic liquid electrolytes, inorganic liquid electrolytes, solid polymer electrolytes, gel polymer electrolytes, solid inorganic electrolytes, and molten inorganic electrolytes that may be used in manufacturing lithium secondary batteries, but are not limited thereto.

Specifically, the organic liquid electrolyte may include an organic solvent and a lithium salt.

The organic solvent may be used without particular limitation as long as it may serve as a medium through which ions involved in the electrochemical reaction of the battery may migrate. Specifically, the organic solvent may include ester solvents such as methyl acetate, ethyl acetate, $\gamma$-butyrolactone, and $\varepsilon$-caprolactone; ether solvents such as dibutyl ether or tetrahydrofuran; ketone solvents such as cyclohexanone; aromatic hydrocarbon-based solvents such as benzene and fluorobenzene; carbonate-based solvents such as dimethylcarbonate (DMC), diethylcarbonate (DEC), methylethylcarbonate (MEC), ethylmethylcarbonate (EMC), ethylene carbonate (EC), and propylene carbonate, PC); alcohol-based solvents such as ethyl alcohol and isopropyl alcohol; nitriles such as R-CN (R is a straight-chain, branched or cyclic hydrocarbon group having 2 to 20 carbon atoms and may contain a double-bonded aromatic ring or an ether bond); amides such as dimethylformamide; dioxolanes such as 1,3-dioxolane; or sulfolanes. Among them, carbonate-based solvents are preferred, and a mixture of a cyclic carbonate (e.g., ethylene carbonate or propylene carbonate, etc.) having high ion conductivity and high dielectric constant capable of enhancing the charge and discharge performance of batteries, and a low-viscosity linear carbonate-based compound (e.g., ethyl methyl carbonate, dimethyl carbonate or diethyl carbonate) is more preferable. In such a case, when the cyclic carbonate and the chain carbonate are mixed in a volume ratio of about 1:1 to about 1:9, the performance of the electrolyte may be excellent.

The lithium salt may be used without particular limitation as long as it is a compound capable of providing lithium ions used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$ or the like. A concentration of the lithium salt is preferably used within a range of 0.1 to 2.0 M. When the concentration of the lithium salt is within the above range, the electrolyte may have appropriate conductivity and viscosity, so excellent electrolyte performance may be exhibited, and lithium ions may migrate effectively.

In addition to the above electrolyte components, for the purpose of improving battery life characteristics, suppressing a decrease in battery capacity, and improving battery discharge capacity, and the like, the electrolyte may include one or more additives such as haloalkylene carbonate-based compounds such as difluoroethylene carbonate, pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride or the like. In such a case, the additive may be included in an amount of 0.1 to 5 parts by weight with respect to the total weight of the electrolyte.

Hereinafter, embodiments of the present disclosure will be described in detail with reference to examples. However, the following examples are merely for illustrating the present disclosure and are not intended to limit the scope of the present disclosure.

**Example 1**

After 5 parts by weight of styrene-butadiene seed latex having a particle size of 55 nm was added into a reactor, the temperature was raised to 80°C, and then 35 g of 1,3-butadiene, 62 g of styrene, and 3 g of itaconic acid as monomers, 0.5 g of $NaHCO_3$ as a buffer, 1 g of sodium polyoxyethylene lauryl ether sulfate as an emulsifier, 1 g of dodecyl mercaptan as a molecular weight modifier, and 1 g of potassium persulfate as a polymerization initiator were added into the reactor for 4 hours, followed by reaction for an additional 4 hours while maintaining 80 °C, thereby preparing 50% solids styrene-butadiene copolymer latex. In such a case, the pH was adjusted to neutral (7) by using sodium hydroxide. As a result of analyzing the size of copolymer particles by using Submicron particle sizer (Nicomp TM 380) after polymerization, the average particle diameter of the polymerized copolymer particles was 150 nm, and a gel content was 85 %.

After 100 g of the prepared styrene-butadiene copolymer latex was added into a reactor, 700 g of N-methyl-pyrrolidone (NMP) was added and mixed, and then the temperature was raised to 90°C, and thereafter, the pressure was reduced to 15 Torr for 1 to 4 hours, thereby replacing water, which is a dispensing solvent of styrene-butadiene copolymer particles, with NMP to prepare a composition containing a styrene-butadiene copolymer dispersed in NMP. Especially, the final moisture content was 10,000 ppm or less, and after checking the solid content, NMP was added to make the final solid content 7.6 %. The moisture content of the final product was measured by a Karl Fischer moisture meter.

**Example 2**

30 g of 1,3-butadiene, 60 g of styrene, 5 g of methylmethacrylate, 2 g of acrylonitrile, 1 g of hydroxyacrylate, and 3 g of itaconic acid as monomers were used, alkyldiphenyloxide disulfonate was used as an emulsifier instead of sodium polyoxyethylene lauryl ether sulfate, and 1g of alkyldiphenyloxide was added before NMP substitution in Example 1, such that a composition containing a styrene-butadiene copolymer dispersed in NMP was prepared in the same method as in Example 1.

**Example 3**

A composition containing a styrene-butadiene copolymer dispersed in NMP was prepared in the same method as in Example 1 except that dodecyl mercaptan was not used as a molecular weight modifier, 0.4 g of sodium polyoxyethylene lauryl ether sulfate was used as an emulsifier, and 450 g of NMP was used in Example 1.

**Example 4**

A composition containing a styrene-butadiene copolymer dispersed in NMP was prepared in the same method as in Example 1 except that 2 g of sodium lauryl sulfate was added as an emulsifier before adding NMP.

**Example 5**

A composition containing a styrene butadiene copolymer dispersed in NMP was prepared in the same manner as in Example 1, except that 5 g of sodium lauryl sulfate was added as an emulsifier before adding NMP.

**Comparative Example 1**

A composition containing a styrene butadiene copolymer dispersed in NMP was prepared in the same manner as in Example 1, except that 2.3 g of dodecyl mercaptan was used as a molecular weight modifier and NMP was increased to 1000 g.

## Comparative Example 2

A composition containing a styrene butadiene copolymer dispersed in NMP was prepared in the same manner as in Example 1, except that sodium polyoxyethylene lauryl ether sulfate was reduced to 0.1 g as an emulsifier.

## Comparative Example 3

An 8 % solid composition was prepared by dissolving PVDF (polyvinylidene fluoride) in NMP.

## Comparative Example 4

An 8 % solid composition was prepared by dissolving a hydrogenated nitrile rubber having a gel content of 0 % in NMP.

## Comparative Example 5

An 8 % solid composition was prepared by dissolving a styrene-butadiene synthetic rubber having a gel content of 0 % in NMP.

## Comparative Example 6

A styrene-butadiene copolymer latex having a solid content of 50 % was prepared in the same method as in Example 2.
After 100 g of the prepared styrene-butadiene copolymer latex was added into a reactor, 530 g of N-methylpyrrolidone (NMP) was added and mixed, and then the temperature was raised to 85°C, and thereafter, the pressure was reduced to 180 Torr for 1 hour, thereby replacing water, which is a dispensing solvent of styrene-butadiene copolymer particles, with NMP to prepare a composition containing a styrene-butadiene copolymer dispersed in NMP. NMP was added to make the final solid content 8 %, and especially, the final moisture content was 50,010 ppm. The moisture content of the final product was measured by a Karl Fischer moisture meter.

## Comparative Example 7

A styrene-butadiene copolymer latex having a solid content of 50 % was prepared in the same method as in Example 2.
After 100 g of the prepared styrene-butadiene copolymer latex was added into a reactor, 530 g of N-methylpyrrolidone (NMP) was added and mixed, and then the temperature was raised to 90°C, and thereafter, the pressure was reduced to 100 Torr for 7 hours, thereby replacing water, which is a dispensing solvent of styrene-butadiene copolymer particles, with NMP to prepare a composition containing a styrene-butadiene copolymer dispersed in NMP. Especially, NMP was added to make the final solid content 8 %, and the final moisture content was 12,201 ppm. The moisture content of the final product was measured by a Karl Fischer moisture meter.

## Comparative Example 8

For comparison with a composition containing a styrene-butadiene latex without dispersion solvent replacement, a composition was prepared by mixing the styrene-butadiene latex prepared in Example 2 in a state in which solvent replacement was not separately conducted, and carboxymethyl cellulose at a weight ratio of 9:1. Carboxymethyl cellulose is a thickening agent and is used to improve coating properties of the styrene-butadiene latex without separate solvent replacement.

## Experimental Example 1

For the compositions prepared in Examples (Ex.) 1 to 5 and Comparative Examples (Comp. Ex.) 1 to 7, a moisture content, a viscosity, a gel content and a total amount of emulsifier were measured according to the method as described in Experimental Examples 1-1, 1-2, 1-3 and 1-4 below, and the results are shown in Table 1 below. The following total amount of emulsifier (%) is with respect to the total solid content of the composition.

[Table 1]

|  | Gel content (%) | Total amount of emulsifier (%) | Moisture content (ppm) | Solid | Viscosity (cp) |
|---|---|---|---|---|---|
| Ex. 1 | 85 | 1.11 | 780 | 7.6 | 2519 |
| Ex. 2 | 80 | 2.13 | 2802 | 8.0 | 7104 |
| Ex. 3 | 97 | 0.61 | 1153 | 14.4 | 3800 |
| Ex. 4 | 85 | 2.85 | 1362 | 8.0 | 3410 |
| Ex. 5 | 85 | 5.39 | 910 | 7.8 | 3120 |
| Comp. Ex. 1 | 69 | 1.04 | 1065 | 5.6 | 4030 |
| Comp. Ex. 2 | 85 | 0.28 | 1523 | 7.5 | 8420 |
| Comp. Ex. 3 (pvdf) | 0 | - | 1252 | 8.0 | 1800 |
| Comp. Ex. 4 (hnbr) | 0 | - | 1540 | 8.0 | 782 |
| Comp. Ex. 5 (sbr) | 0 | - | 2803 | 8.0 | gelation |
| Comp. Ex. 6 | 80 | 1 | 50010 | 8.0 | 122 |
| Comp. Ex. 7 | 80 | 1 | 12201 | 8.0 | 1605 |

**Experimental Example 1-1: Moisture content measurement**

The compositions prepared in Examples 1 to 5 and Comparative Examples 1 to 7 were measured for moisture content by using a Metrohm 899 Coulometer connected with an 860 KF Thermoprep (oven) while 0.1 to 0.4 g of each sample was weighed and the temperature of the oven was adjusted to 220°C.

**Experimental Example 1-2: Viscosity measurement**

The compositions prepared in Examples 1 to 5 and Comparative Examples 1 to 7 were measured for viscosity, 1 minute after turning at 12 rpm using a spindle No. 63 of an LV type viscometer manufactured by Brookfield at 25°C. If the viscosity was out of the measurement range, it was measured by lowering the rpm value.

**Experimental Example 1-3: Gel content measurement**

The compositions prepared in Examples 1 to 5 and Comparative Examples 1 to 7 were measured for gel content. After drying 10 g of the obtained sample at 135°C for 30 minutes to form a thin film, it was cut into 2 mm × 2 mm width. A dish was made with 200 mesh, and weighed with a precision scale, and the weight is marked as A. 0.3 to 0.4 g of the cut film was put in the dish, and a weight of the film was weighed and marked as B. The dish was put in a 100 ml glass bottle, 75 ml tetrahydrofuran was added, and then, the dish and the glass bottle were sealed, put in a water bath type ultrasonic device, sonicated for 3 hours, taken out, washed with 50 ml tetrahydrofuran, and dried in an oven at 135°C for 30 minutes. After drying, a weight was measured with a precision scale and marked as C. During sonication, a temperature of the water bath may not exceed 50°C. The final gel content (%) is calculated as follows.

$$\text{Gel content (\%) = (C-A)/B * 100}$$

**Experimental Example 1-4: Total emulsifier amount measurement**

The compositions prepared in Examples 1 to 5 and Comparative Examples 1 to 7 were measured for total amount of emulsifier. Acetonitrile/methanol was applied to 0.5 g of the obtained sample to precipitate a polymer component. After stirring for 1 hour, the polymer was settled using a centrifugal separator, and a supernatant was filtered, and the emulsifier amount was measured using HPLC/PDA/MS. The total amount of emulsifier is shown in Table 1 in terms of the emulsifier content relative to the total weight of the solid content.

**Experimental Example 2**

The compositions prepared in Examples 1 to 5 and Comparative Examples 1 to 5 were measured for initial tackiness (e.g., adhesion), storage stability and insulation characteristics according to the method described in Experimental Examples 2-1, 2-2 and 2-3, and the results are shown in Table 2 below.

[Table 2]

|  | Initial tackiness (gf/cm) | Reduction rate of solid content in the upper layer (%) | High temperature 0.1C discharge capacity ratio (%) |
|---|---|---|---|
| Ex. 1 | 9 | 1.3 | 0.8 |
| Ex. 2 | 7 | 0.9 | 0.4 |
| Ex. 3 | 15 | 2.7 | 0.2 |
| Ex. 4 | 13 | 0.8 | 0.4 |
| Ex. 5 | 14 | 1.1 | 1.8 |
| Comp. Ex.1 | 102 | 18.14 | 1.3 |
| Comp. Ex.2 | 10 | 26.8 | 0.9 |
| Comp. Ex.3 (pvdf) | 5 | 0.6 | 8.5 |
| Comp. Ex.4 (hnbr) | 624 | 0.7 | 5.4 |
| Comp. Ex.5 (sbr) | 1088 | 0.5 | 2.5 |

**Experimental Example 2-1: Initial Tackiness Evaluation**

The compositions prepared in Examples 1 to 5 and Comparative Examples 1 to 5 were each coated on an aluminum metal foil and dried at 130°C to prepare a metal specimen formed with an insulating coating layer having a thickness of about 10 um. The metal specimen was cut into a size of 2 cm × 12 cm, laminated to a Sus plate, and then a 90° tackiness was measured, and the results are shown in Table 2 above.

As may be seen from Table 2, it was appreciated that all of the compositions of Examples 1 to 5 had low initial tackiness. If the initial tackiness is low, there is little possibility of degrading processability due to sticking to the electrode or the current collector in the winding and slitting process. On the other hand, Comparative Example 1 having a gel content of less than 70 wt% and Comparative Examples 4 to 5 having no gel content had too high initial tackiness, and electrodes may stick to each other in the winding and slitting processes, thus degrading processability.

**Experimental Example 2-2: Storage stability evaluation**

200 ml of each of the compositions prepared in Examples 1 to 5 and Comparative Examples 1 to 5 was placed in a 250 ml glass bottle, sealed, stored in an oven at 100°C for 7 days, taken out, and stored at room temperature for one day, and then, a solid content of an upper layer was measured to check a solid content reduction rate compared to a basic solid content, and the results are shown in Table 2 above.

The composition of Comparative Example 1 having a low gel content and the composition of Comparative Example 2 having a low emulsifier content showed a higher solid content reduction rate than the compositions of Examples 1 to 5. Accordingly, it was appreciated that phase separation occurred over time and storage stability was significantly lowered.

**Experimental Example 2-3: Insulating characteristics measurement**

A slurry for a cathode mixture layer was prepared by weighing 96 parts by weight of $LiNi_{0.8}Co_{0.2}Mn_{0.2}O_2$ as a cathode active material, 2 parts by weight of PVDF as a binder, and 2 parts by weight of carbon black as a conducting agent and mixing the same in an N-methyl pyrrolidone (NMP) solvent. The slurry for a mixture layer was applied to aluminum foil, dried, and then rolled to prepare a cathode having a cathode mixture layer with a thickness of 60 um.

Thereafter, the insulating solution, which is the composition prepared in Examples 1 to 5 and Comparative Examples 1 to 5, was applied on the cathode mixture layer and dried to form a cathode insulation layer having a thickness of 10 μm.

A coin-type half-cell was manufactured by using the cathode, lithium foil as an anode, and an electrolyte containing 1 M $LiPF_4$ in a solvent of EC:ECM = 3:7. The coin-type half-cell was storage in an oven at 60°C for 15 days, and then the discharge capacity of the half-cell was measured to investigate the insulating effect of an insulating layer. For comparison, a half-cell having a cathode without an insulating coating layer was manufactured, and the discharge capacity ratios of cathodes with insulating coating layers formed of the compositions of Examples 1 to 5 and Comparative Examples 1 to 5 were calculated while 0.1 C discharge capacity was set to 100. The results are shown in Table 2 above.

As may be seen from Table 2, it may be appreciated that the compositions of Comparative Examples 3 to 5 have a higher 0.1C discharge capacity ratio than the compositions of Examples 1 to 5, which means that the insulation layer is swollen or detached, resulting in poor insulation performance, and the cathode capacity under the insulation layer was partially expressed. In the case of Example 5, in which the content of the emulsifier was 5.39%, which was slightly higher than that of Examples 1 to 4, it was appreciated that the excessive amount of the emulsifier slightly lowered the WET tackiness in the electrolyte solution, thereby partially expressing the capacity of the cathode.

**Experimental Example 3: Moisture influence Evaluation**

A slurry for a cathode mixture layer was prepared by weighing 96 parts by weight of $LiNi_{0.8}Co_{0.2}Mn_{0.2}O_2$ as a cathode active material, 2 parts by weight of PVDF as a binder, and 2 parts by weight of carbon black as a conducting agent and mixing the same in an N-methyl pyrrolidone (NMP) solvent.

Thereafter, the slurry for a cathode mixture layer and the slurry for an insulating coating layer prepared in each of Example 2 and Comparative Examples 6 to 8 were simultaneously applied to a current collector by using a doctor blade such that the slurries are overlaid. The appearance immediately after application and 1 minute after application were observed and the results are shown in FIG. 1. As may be seen from FIG. 1, as a result of comparison between immediately after application and 1 minute after application, the composition of Example 2 maintained initially coated conditions without permeation at an overlay portion immediately after application and 1 minute after application, but Comparative Examples 6 to 8 having a high moisture content as compared to Example 2 failed to straightly maintain the coating boundaries since the electrode slurries permeated into the insulating layer.

In particular, in Comparative Example 8 in which the dispersion solvent is not replaced showed agglomeration by moisture, from immediately after application, in a portion where the cathode slurry and the insulating solution met, and accordingly, it may be confirmed that an aqueous insulating liquid without solvent replacement may not be simultaneously coated with the cathode slurry.

This may be interpreted that if the moisture content of the slurry for a cathode insulation coating layer exceeds 10,000 ppm, when the slurry for a cathode mixture layer and the slurry for an insulation layer are simultaneously coated, the slurry for a cathode mixture layer permeates toward the slurry for a cathode insulation coating layer, making it difficult to exhibit the expected insulation effect.

**Experimental Example 4: Carboxymethylcellulose Effect Evaluation**

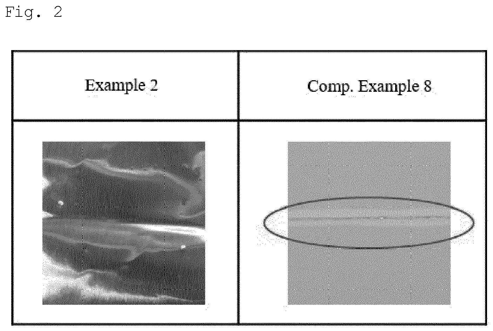

Each of the compositions prepared in Example 2 and Comparative Example 8 was coated on a substrate to a final thickness of 20 μm, dried at 130°C, and cut to a width of 2 cm, and brittleness was measured. After folding the specimen in half at room temperature, followed by pressing it once with a 1 kg roller and then unfolding it, whether or not the coating film was broken or cracked was visually checked, and the results are shown in FIG. 2 below. In the case of Example 2, the film was not broken or cracked, but in the case of Comparative Example 8, the film was cracked. The composition of Comparative Example 8 is a composition obtained by mixing the styrene butadiene latex prepared in Example 2 with carboxymethylcellulose in a weight ratio of 9:1 without solvent replacement, which is brittle even when a small amount of carboxymethylcellulose is added as a thickener and this affects the coating film, and accordingly, even when the styrene butadiene latex is separately coated rather than simultaneous coating, the insulation layer may be broken or detached during the winding and slitting process.

Although the preferred embodiments of the present disclosure have been described above, the present disclosure is not limited thereto, and it is possible to carry out various modifications within the scope of the claims and the detailed description of the disclosure and the accompanying drawings, and this also falls within the scope of the present disclosure.

Therefore, the substantial scope of the present disclosure will be defined by the appended claims and equivalents thereof.

**Claims**

1. An insulation-layer forming composition for a lithium secondary battery, the insulation-layer forming composition comprising:

   a conjugated diene copolymer as a binder polymer;
   a non-aqueous organic solvent; and
   an emulsifier,
   wherein a gel content is 70 percent by weight (wt%) or more with respect to a total solid weight, and
   a content of the emulsifier is 0.3 wt% or more with respect to the total solid weight.

2. The insulation-layer forming composition of claim 1, wherein the insulation-layer forming composition for a lithium secondary battery does not contain carboxymethylcellulose.

3. The insulation-layer forming composition of claim 1, wherein the conjugated diene copolymer comprises a polymerized product of one or more monomers selected from the group consisting of: (a) a conjugated diene-based monomer or a conjugated diene-based polymer; (b) one or more monomers selected from the group consisting of acrylate-based monomers, vinyl-based monomers, and nitrile-based monomers; and (c) unsaturated carboxylic acid-based monomers and hydroxy group-containing monomers.

4. The insulation-layer forming composition of claim 3, wherein the conjugated diene-based monomer is one monomer selected from the group consisting of 1,3-butadiene, isoprene, chloroprene, and piperylene, and
   the conjugated diene-based polymer is a polymer of two or more monomers selected from the group consisting of 1,3-butadiene, isoprene, chloroprene, and piperylene, a styrene-butadiene copolymer, an acrylonitrile-butadiene copolymer, a styrene-isoprene copolymer, an acrylate-butadiene rubber, an acrylonitrile-butadiene-styrene rubber, an ethylenepropylene-diene based polymer, or a partially epoxidized or brominated polymer of the forgoing polymers, or mixtures thereof.

5. The insulation-layer forming composition of claim 3, wherein the acrylate-based monomer is at least one monomer selected from the group consisting of methylethacrylate, methacryloxy ethylethyleneurea, β-carboxy ethylacrylate, aliphatic monoacrylate, dipropylene diacrylate, ditrimethylolpropane tetraacrylate, dipentaerythriol hexaacrylate, pentaerythriol triacrylate, pentaerythriol tetraacrylate, and glycidyl methacrylate.

6. The insulation-layer forming composition of claim 3, wherein the vinyl-based monomer is at least one monomer selected from the group consisting of styrene, α-methylstyrene, β-methylstyrene, p-t-butylstyrene, and divinyl benzene.

7. The insulation-layer forming composition of claim 3, wherein the nitrile-based monomer is at least one monomer selected from the group consisting of acrylonitrile, methacrylonitrile, and allyl cyanide.

8. The insulation-layer forming composition of claim 3, wherein the unsaturated carboxylic acid-based monomer is at least one monomer selected from the group consisting of maleic acid, fumaric acid, methacrylic acid, acrylic acid, glutaric acid, itaconic acid, tetrahydrophthalic acid, corotonic acid, isocrotonic acid, and nadic acid.

9. The insulation-layer forming composition of claim 3, wherein the hydroxy group-containing monomer is at least one monomer selected from the group consisting of hydroxy acrylate, hydroxyethyl acrylate, hydroxybutyl acrylate, hydroxypropyl acrylate, hydroxyethyl methacrylate, hydroxypropyl methacrylate, and hydroxybutyl methacrylate.

10. The insulation-layer forming composition of claim 3, wherein the conjugated diene copolymer contains a polymerized product of, with respect to the total weight thereof, 25 to 45 wt% of the conjugated diene-based monomer or conjugated diene-based polymer (a), 50 to 70 wt% of the one or more monomers selected from the group consisting of acrylate-based monomers, vinyl-based monomers, and nitrile-based monomers (b), and 1 to 20 wt% of the one or more monomers selected from the group consisting of unsaturated carboxylic acid-based monomers and hydroxy group-containing monomers (c).

11. The insulation-layer forming composition of claim 1, wherein the non-aqueous organic solvent is at least one selected from the group consisting of N-methyl-pyrrolidone (NMP), dimethylformamide (DMF), dimethylacetamide (DMAc), dimethyl sulfoxide (DMSO), ethylene carbonate (EC), diethyl carbonate (DEC), ethyl methyl carbonate (EMC),

dimethyl carbonate (DMC), propylene carbonate (PC), dipropyl carbonate (DPC), butylene carbonate (BC), methylpropyl carbonate (MPC), ethylpropyl carbonate (EPC), acetonitrile, dimethoxyethane, tetrahydrofuran (THF), γ-butyrolactone, methyl alcohol, ethyl alcohol, and isopropyl alcohol.

12. The insulation-layer forming composition of claim 1, wherein the conjugated diene copolymer particles having an average particle diameter of 50 nm or more to 500 nm or less are present in an independent phase.

13. The insulation-layer forming composition of claim 1, wherein the copolymer is a styrene-butadiene copolymer, and the non-aqueous organic solvent is N-methyl-pyrrolidone (NMP) .

14. The insulation-layer forming composition of claim 1, wherein the conjugated diene copolymer is a styrene-butadiene copolymer latex, and the non-aqueous organic solvent is N-methyl-pyrrolidone (NMP).

15. The insulation-layer forming composition of claim 1, having a moisture content of 10,000 ppm or less.

16. A method for manufacturing a cathode for a lithium secondary battery, the method comprising:

preparing a water-dispersed conjugated diene copolymer;
adding a non-aqueous organic solvent to the water-dispersed conjugated diene copolymer, followed by warming and decompression, to prepare a slurry for an insulating coating layer;
applying a slurry for a cathode mixture layer on one or both surfaces of a cathode current collector, the slurry for a cathode mixture layer containing a cathode active material, a non-aqueous binder, a conductor, and a non-aqueous organic solvent;
applying the slurry for an insulating coating layer to cover a partial region of the slurry for a cathode mixture layer applied to the cathode current collector, from a partial region of a non-coated part of the cathode current collector; and
drying the slurry for a cathode mixture layer and the slurry for an insulating coating layer applied to the cathode current collector,
wherein the slurry for an insulating coating layer comprises an emulsifier.

17. The method of claim 16, wherein the preparing of the slurry for an insulating coating layer comprises replacing water, which is a dispersion solvent of conjugated diene copolymer particles, with a non-aqueous organic solvent.

18. The method of claim 17, wherein the conjugated diene copolymer particles maintain a particle shape even after the dispersion solvent is replaced with the non-aqueous organic solvent.

19. The method of any one of claims 16 to 18, wherein the conjugated diene copolymer is a conjugated diene latex.

20. The method of claim 16, wherein the conjugated diene copolymer is a styrene-butadiene latex, and the non-aqueous organic solvent is N-methyl-pyrrolidone (NMP).

21. A cathode for a lithium secondary battery, comprising:

a cathode current collector;
a cathode tap protruding from the cathode current collector; and
an insulation layer coated on the cathode tap and formed of an insulating material,
wherein the insulating material contains the composition of claim 1.

22. A lithium secondary battery comprising the cathode for a lithium secondary battery of claim 21.

Fig. 1

| | Example 2 | Example 6 | Example 7 | Example 8 |
|---|---|---|---|---|
| Initial | | | | |
| After 1 min | | | | |

Fig. 2

| Example 2 | Comp. Example 8 |
|---|---|
| | |

## INTERNATIONAL SEARCH REPORT

International application No.

**PCT/KR2023/004544**

| A. | CLASSIFICATION OF SUBJECT MATTER |
|---|---|

**H01M 10/42**(2006.01)i; **H01M 50/586**(2021.01)i; **H01M 4/139**(2010.01)i; **H01M 10/052**(2010.01)i; **H01M 50/531**(2021.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 10/42(2006.01); C08L 53/02(2006.01); H01M 10/05(2010.01); H01M 10/052(2010.01); H01M 4/13(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 절연층(insulating layer), 콘쥬게이트 디엔(conjugated dienes), 겔(gel), 함량(content)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2021-065742 A1 (ZEON CORPORATION) 08 April 2021 (2021-04-08)<br>See paragraphs [0068]-[0073] and claims 1 and 7. | 1-22 |
| Y | KR 10-0845702 B1 (LG CHEM, LTD.) 11 July 2008 (2008-07-11)<br>See paragraph [0097]. | 1-15,21-22 |
| Y | KR 10-2016-0148853 A (LG CHEM, LTD.) 27 December 2016 (2016-12-27)<br>See paragraph [0013] and claims 1-2, 4, 6, 8-9 and 11-14. | 3-10,12-14,19-20 |
| DY | KR 10-1586530 B1 (LG CHEM, LTD.) 21 January 2016 (2016-01-21)<br>See paragraphs [0042]-[0043] and claim 1. | 16-22 |
| A | KR 10-2016-0064025 A (LG CHEM, LTD.) 07 June 2016 (2016-06-07)<br>See claims 1-20. | 1-22 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 July 2023** | **13 July 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/004544**

| Patent document cited in search report | | | Publication date (day/month/year) | Patent family member(s) | | | Publication date (day/month/year) |
|---|---|---|---|---|---|---|---|
| WO | 2021-065742 | A1 | 08 April 2021 | CN | 114258601 | A | 29 March 2022 |
| | | | | EP | 4039743 | A1 | 10 August 2022 |
| | | | | KR | 10-2022-0069924 | A | 27 May 2022 |
| | | | | US | 2022-0336814 | A1 | 20 October 2022 |
| | | | | WO | 2021-065742 | A1 | 08 April 2021 |
| KR | 10-0845702 | B1 | 11 July 2008 | KR | 10-2007-0023141 | A | 28 February 2007 |
| KR | 10-2016-0148853 | A | 27 December 2016 | CN | 106797032 | A | 31 May 2017 |
| | | | | CN | 106797032 | B | 27 August 2019 |
| | | | | EP | 3312918 | A1 | 25 April 2018 |
| | | | | EP | 3312918 | B1 | 16 September 2020 |
| | | | | KR | 10-1953765 | B1 | 12 June 2019 |
| | | | | PL | 3312918 | T3 | 08 March 2021 |
| | | | | US | 11223046 | B2 | 11 January 2022 |
| | | | | US | 2018-0108912 | A1 | 19 April 2018 |
| | | | | WO | 2016-204530 | A1 | 22 December 2016 |
| KR | 10-1586530 | B1 | 21 January 2016 | CN | 104170126 | A | 26 November 2014 |
| | | | | EP | 2802029 | A1 | 12 November 2014 |
| | | | | EP | 2802029 | B1 | 12 September 2018 |
| | | | | JP | 2015-517189 | A | 18 June 2015 |
| | | | | JP | 6296569 | B2 | 20 March 2018 |
| | | | | KR | 10-2014-0112609 | A | 24 September 2014 |
| | | | | PL | 2802029 | T3 | 28 February 2019 |
| | | | | TW | 201508985 | A | 01 March 2015 |
| | | | | TW | I589055 | B | 21 June 2017 |
| | | | | US | 2014-0255778 | A1 | 11 September 2014 |
| | | | | US | 9755213 | B2 | 05 September 2017 |
| | | | | WO | 2014-142458 | A1 | 18 September 2014 |
| KR | 10-2016-0064025 | A | 07 June 2016 | KR | 10-1822638 | B1 | 26 January 2018 |

Form PCT/ISA/210 (patent family annex) (July 2022)

**REFERENCES CITED IN THE DESCRIPTION**

**Patent documents cited in the description**

- KR 1020220041849

- KR 101586530 B1